# EUROPEAN PATENT APPLICATION

(11) **EP 3 620 290 A1**
(43) Date of publication of application: **11.03.2020**
(21) Application number: 19167934.9
(22) Date of filing: 08.04.2019
(51) Int. Cl.: B29C 64/124, B29C 64/321, B33Y 30/00

(54) **3D PRINTING METHOD OF IMPROVING EFFECTIVENESS OF POURING MATERIALS**

(30) Priority: 04.09.2018 CN 201811024855
(71) Applicant: XYZprinting, Inc., New Taipei City 22201 (TW); Kinpo Electronics, Inc., New Taipei City 22201 (TW)
(72) Inventor: CHOU, Ching-Yuan, 22201 New Taipei City (TW)
(74) Representative: 2K Patentanwälte Blasberg Kewitz & Reichel

(57) **Abstract**

A 3D printing method of improving effectiveness of pouring materials for a stereolithography 3D printer (2) is provided. The stereolithography 3D printer (2) controls a moving module (22) to start to move a material tank (23) when a condition to supply for refilling satisfies, controls a material-providing module (26) to start to pour light-curable materials (41) into the material tank (23), and controls a light module (21) and a curing platform (24) to print multiple layers of slice physical models layer (42) by layer according to multiple layers of print data after completion of pouring the light-curable materials (42) and moving, the multiple layers of slice physical models (42) constitutes a 3D physical model. Thus, the waiting time after supplementing to the light-curable materials can be effectively reduced, and the time required by execution of 3D printing can be reduced as well.

## Description

### BACKGROUND OF THE INVENTION

### Field of the Invention

The present invention generally relates to 3D printing and more particularly relates to a 3D printing method of improving effectiveness of pouring materials.

### Description of Related Art

A stereolithography 3D printer of the related art has an ability to cure the light-curable materials into a 3D physical model by light-irradiating. More specifically, the stereolithography 3D printer comprises a curing platform, a material tank, a material-providing module and a light module. The material tank is used to accommodate the colloidal (or semi-colloidal) light-curable materials. During the execution of stereolithography 3D printing, the stereolithography 3D printer controls the material-providing module to pour the new light-curable materials into the material tank, and waits for the liquid level of the light-curable materials in the material tank becoming a horizontal status via naturally flowing. After the liquid level becomes the horizontal status, the stereolithography 3D printer control the curing platform and the light module to print a 3D physical model by using the light-curable materials with the horizontal status.

Because the light-curable materials belong to colloidal (or semi-colloidal) solution and have stronger adhesion, it is a very long time (such as more than 30 minutes) to make the light-curable materials in the material tank become the horizontal status via naturally flowing and be available for 3D printing, such that the time required by 3D printing is substantial increased.

Thus, the stereolithography 3D printing technology has above-mentioned problems, there is a need for a more effective solution.

### SUMMARY OF THE INVENTION

It is an object of the present invention to provide a 3D printing method suitable of improving effectiveness of pouring materials to thereby overcome the afore-mentioned drawbacks of the prior art.

This problem is solved by a 3D printing method as claimed by claim 1. Further advantageous embodiments are the subject-matter of the dependent claims.

According to the present invention there is provided a 3D printing method of improving effectiveness of pouring materials, wherein the method has the ability of reducing the time required by making the light-curable materials become a horizontal status.

One of the exemplary embodiments, a 3D printing method of improving effectiveness of pouring materials, the 3D printing method of improving is applied to a stereolithography 3D printer, the stereolithography 3D printer comprises a light module, a curing platform, a material tank, a material-providing module, a moving module, the 3D printing method of improving effectiveness of pouring materials comprises following steps: when a condition to supply for refilling satisfies, controlling the moving module to start to move the material tank, and controlling the material-providing module to pour the new light-curable materials into the material tank, wherein execution of pouring the new light-curable materials is before starting to move the material tank, after starting to move the material tank, or simultaneous with starting to move the material tank; controlling the material-providing module to stop pouring the new light-curable materials into the material tank, and controlling the moving module to stop moving the material tank, wherein execution of stopping moving the material tank is before stopping pouring the new light-curable materials, after stopping pouring the new light-curable materials, or simultaneous with stopping pouring the new light-curable materials; and, controlling the light module and the curing platform to print at least one of multiple layers of slice physical models according to multiple layers of print data, the multiple layers of the slice physical models constitutes a 3D physical model.

The present disclosed example can reduce the waiting time after supplementing to the light-curable materials effectively, and then reduce the time required by execution of 3D printing.

### BRIEF DESCRIPTION OF DRAWING

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:
Fig. 1A is a first schematic view of stereolithography 3D printing of the related art;
Fig. 1B is a second schematic view of stereolithography 3D printing of the related art;
FIG. 2 is an architecture diagram of a stereolithography 3D printer according to one embodiment of the present disclosed example;
Fig. 3A is a look-down schematic view of moving material tank according to one embodiment of the present disclosed example;
Fig. 3B is a look-down schematic view of moving material tank according to another embodiment of the present disclosed example;
Fig. 4A is a first schematic view of stereolithography 3D printing according to one embodiment of the present disclosed example;
Fig. 4B is a second schematic view of stereolithography 3D printing according to one embodiment of the present disclosed example;
Fig. 4C is a third schematic view of stereolithography 3D printing according to one embodiment of the present disclosed example;
Fig. 4D is a forth schematic view of stereolithography 3D printing according to one embodiment of the present disclosed example;
Fig. 5 is a schematic view of appearance of a 3D printer according to one embodiment of the present disclosed example;
Fig. 6 is a flowchart of a 3D printing method of improving effectiveness of pouring materials according to a first embodiment of the present disclosed example;
Fig. 7 is a flowchart of a 3D printing method of improving effectiveness of pouring materials according to a second embodiment of the present disclosed example; and
Fig. 8 is a flowchart of a 3D printing method of improving effectiveness of pouring materials according to a third embodiment of the present disclosed example.

### DETAILED DESCRIPTION OF THE INVENTION

In cooperation with attached drawings, the technical contents and detailed description of the present disclosed example are described thereinafter according to a preferable embodiment, being not used to limit its executing scope. Any equivalent variation and modification made according to appended claims is all covered by the claims claimed by the present disclosed example.

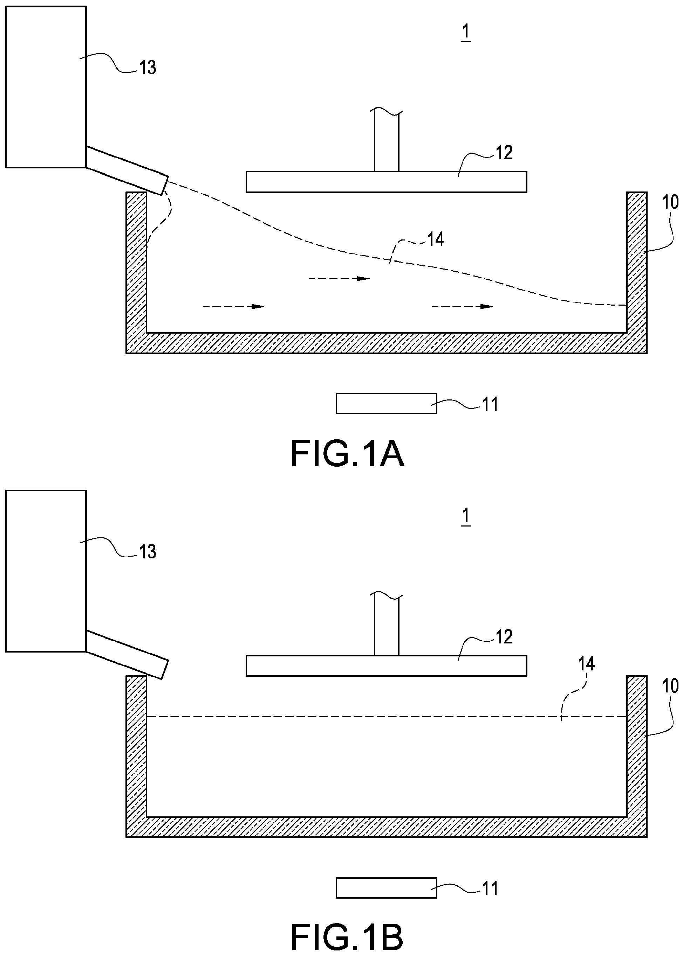

Please refer to Fig. 1A and Fig. 1B simultaneously, Fig. 1A is a first schematic view of stereolithography 3D printing of the related art, and Fig. 1B is a second schematic view of stereolithography 3D printing of the related art. Fig. 1A and Fig. 1B are used to exemplary explain the technical problems solved by the present disclosed example.

As shown in Fig. 1A, in general, the stereolithography 3D printer 1 of the related art (take an uplight stereolithography 3D printer for example) comprises a material tank 10, a light module 11, a curing platform 12, and a material-providing module 13. The material-providing module 13 is used to accommodate the colloidal (or semi-colloidal) light-curable materials, such as UV curable resin.

When supplementing to the light-curable materials 14 (such as the time before starting to print or during printing), the stereolithography 3D printer 1 may control the material-providing module 13 to pour the new light-curable materials 13 into the material tank 10.

Because the surface tension of the colloidal (or semi-colloidal) light-curable materials 14 is stronger, the light-curable materials 14 poured into the material tank 10 will firstly accumulate at a pouring position (as shown in Fig. 1A, the light-curable materials 14 accumulate on the left-half side of the accommodation space of the material tank 10).

Then, the stereolithography 3D printer 1 must wait for a very long time (such as more than 30 minutes) after completion of pouring the new light-curable materials 14. During waiting, the light-curable materials 14 in the material tank 10 become a horizontal status slowly via naturally flowing.

Finally, the stereolithography 3D printer 1 executes the 3D printing by using the light-curable materials 14 with the horizontal status (as shown in Fig. 1B).

The stereolithography 3D printing technology of the related art must spend a very long time waiting for the poured light-curable materials 14 becoming the horizontal status, such that the time required by execution of 3D printing is increased substantially.

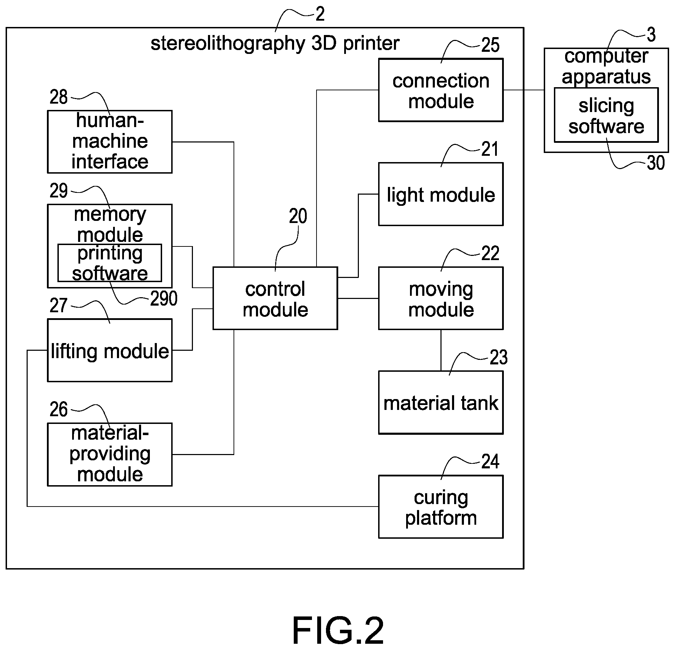

Please refer to FIG. 2, which is an architecture diagram of a stereolithography 3D printer according to one embodiment of the present disclosed example. As shown in the figure, a stereolithography 3D printer 2 is disclosed by this embodiment.

The stereolithography 3D printer 2 mainly comprises a light module 21, a moving module 22, a material tank 23, a curing platform 24, a material-providing module 26 and a control module 20 electrically connected to above devices.

The control module 20 is configured to control the stereolithography 3D printer 2 to execute the stereolithography 3D printing. The light module 21 is configured to emit the beams heading to the curing platform 24 (the light module 21 may be a single point light source, a line light source or a plane light source). The beams penetrate the light-curable materials and irradiate one or more designated print position(s) on the curing platform 24 for curing the light-curable materials (such as curing the light-curable materials 41 between the curing platform 24 and the demodeling film 40) in the light path.

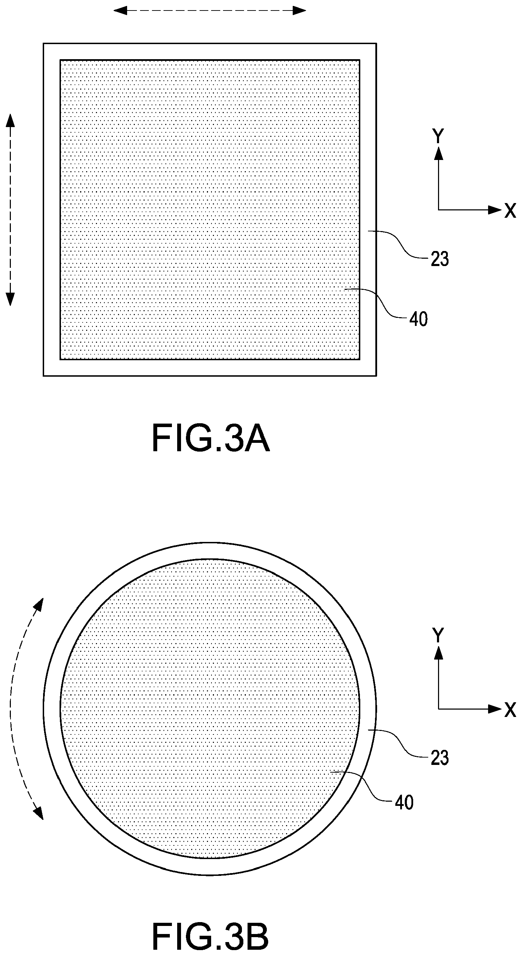

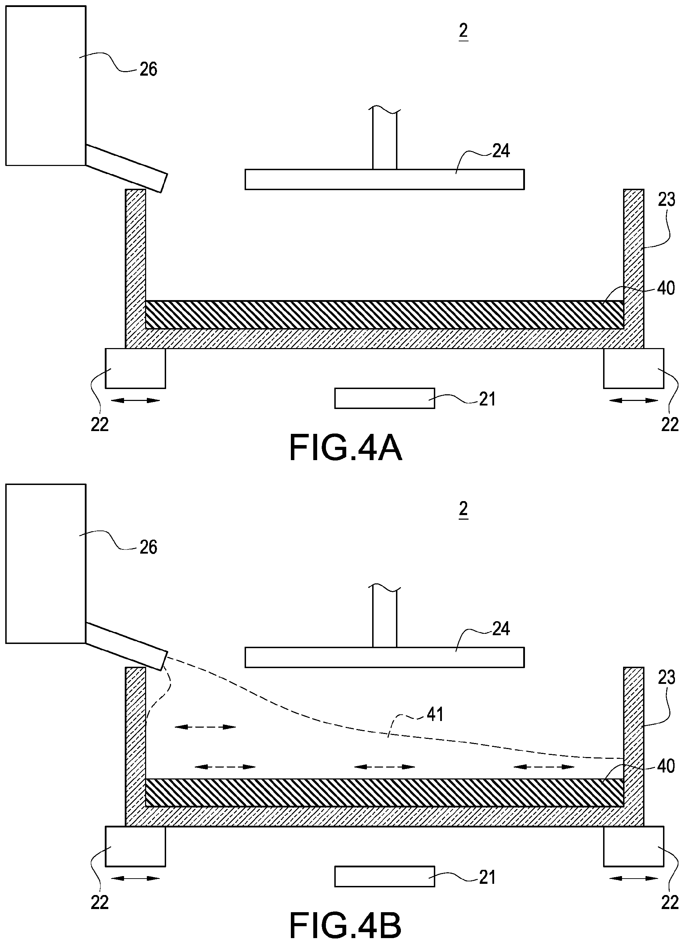

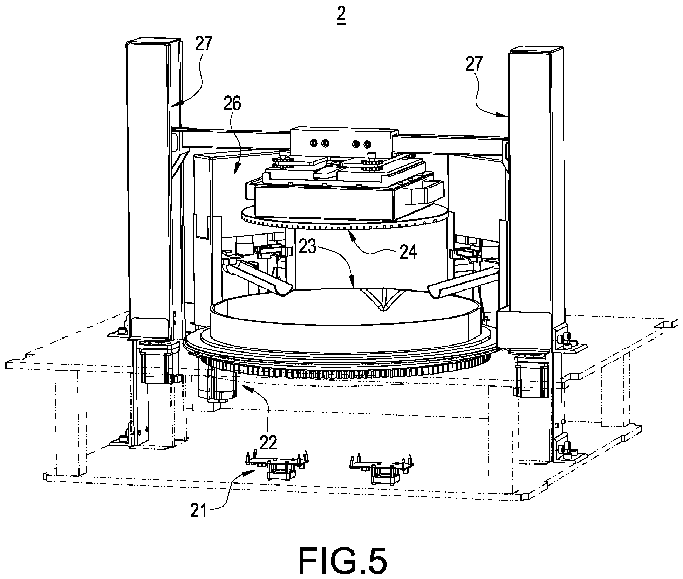

The material tank 23 is used to accommodate the colloidal (or semi-colloidal) light-curable materials 41, such as UV curable resin. One of the exemplary embodiments, when the stereolithography 3D printer 2 is an uplight stereolithography 3D printer (as shown in Fig. 4A to Fig. 4D and Fig. 5), a bottom case of the material tank 23 may be made from the light-transmissive material (such as light-transmissive acrylic), and one layer of light-transmissive demodeling film (such as the demodeling film 40 shown in Fig.3A and 3B, the tenacity film 40 may be made from light-transmissive silicone) is laid on the bottom inside the tank. Thus, the beams irradiated by the light module 21 may transmit through the bottom case of the material tank 23 and the demodeling film 40 to irradiate the light-curable materials 41 in the material tank 23.

The moving module 23 is connected to the material tank 23, and is configured to be controlled to move (such as horizontal movement, rotation or a combination of horizontal movement and rotation) the material tank 23 by the control module 20 for making the light-curable materials 41 accommodated in the material tank 23 flow caused by moving the material tank 23. The curing platform 24 is used to carry the manufactured 3D physical model.

The material-providing module 26 accommodates the colloidal (or semi-colloidal) light-curable materials 41 and has an ability of pouring the designated volume of light-curable materials 41 (with designated flow rate) into the material tank 23.

Please refer to Fig. 3A, which is a look-down schematic view of moving material tank according to one embodiment of the present disclosed example. As shown in the figure, in this example, a shape of the material tank 23 is square (the shape of the material tank 23 can be changed to other shapes), and a demodeling film 40 is laid on a bottom of the material tank 23. Moreover, the moving module 22 horizontally moves the material tank 23 back and forth in the horizontal direction (such as any direction in the X-Y plane). For example, moving the material tank 23 back and forth along the X axis.

Please refer to Fig. 3B, which is a look-down schematic view of moving material tank according to another embodiment of the present disclosed example. As shown in the figure, in this example, the shape of the material tank 23 is circular (the shape of the material tank 23 can be changed to other shapes), and the demodeling film 40 is laid on the bottom of the material tank 23. Moreover, the moving module 22 horizontally rotates the material tank 23 (such as horizontally rotating in the X-Y plane). For example, rotating 180 degrees clockwise, rotating 180 degrees anticlockwise or combination of rotating clockwise and anticlockwise.

Please be noted that although the material tank 23 which its shape is non-circular (such as being square, rectangle or regular hexagon) has the advantages of easy to make, big printable area and so forth, the non-circular material tank 23 is not suitable for the moving means of rotation because rotating the non-circular material tank 23 needs larger space. Thus, the present disclosed example can drastically save the space required by rotation via using the moving means of horizontally moving back and forth on the non-circular material tank 23.

Moreover, for the circular molding groove 23, the present disclosed example can achieve the following advantages via using the moving means of horizontally rotating: it being not necessary to additionally plan a moving space for the material tank 23 (by situ rotation); and it being easy to adjust a flow speed of the light-curable materials 41 (by adjusting the rotating speed of the material tank 23).

Please refer to Fig. 2, one of the exemplary embodiments, the stereolithography 3D printer 2 further comprises a connection module 25 electrically connected to the control module 20, such as USB module, PCI bus module, Wi-Fi module or Bluetooth module. The connection module 25 is configured to connect to the computer apparatus 3 and receive the print data from the computer apparatus3. One of the exemplary embodiments, the computer apparatus 3 stores a slicing software 30, the computer apparatus 3 may execute the slicing software 30 to execute a slicing process on the 3D model data for obtaining the multiple layers of print data (such as a plurality of 2D images), and transfer the print data to the connection module 25 for 3D printing.

One of the exemplary embodiments, the stereolithography 3D printer 3 further comprises a lifting module 27 electrically connected to the control module 20 and connected to the curing platform 24. The lifting module 27 may be controlled by the control module 20 to move the curing platform 24 along a default axis (such as lifting in the Z axis).

One of the exemplary embodiments, the stereolithography 3D printer 2 further comprises a human-machine interface 28 (such as buttons, a monitor, indicators, a buzzer, or any combination of above elements) electrically connected to the control module 20. The human-machine interface 28 is configured to receive a user operation and output the print-related information.

One of the exemplary embodiments, the stereolithography 3D printer 2 further comprises a memory module 29 electrically connected to the control module 20. The memory module 29 is used to store data, such as print data.

One of the exemplary embodiments, the memory module 29 comprises a non-transient computer-readable recording media, above non-transient computer-readable recording media stores a printing software 290, such as a firmware or an operating system of the stereolithography 3D printer 2. A plurality of computer-executable codes is recorded in above-mentioned printing software 290. The control module 20 may control the stereolithography 3D printer 2 to perform each step of the 3D printing method of improving effectiveness of pouring materials of each embodiment of the present disclosed example after execution of the printing software 290.

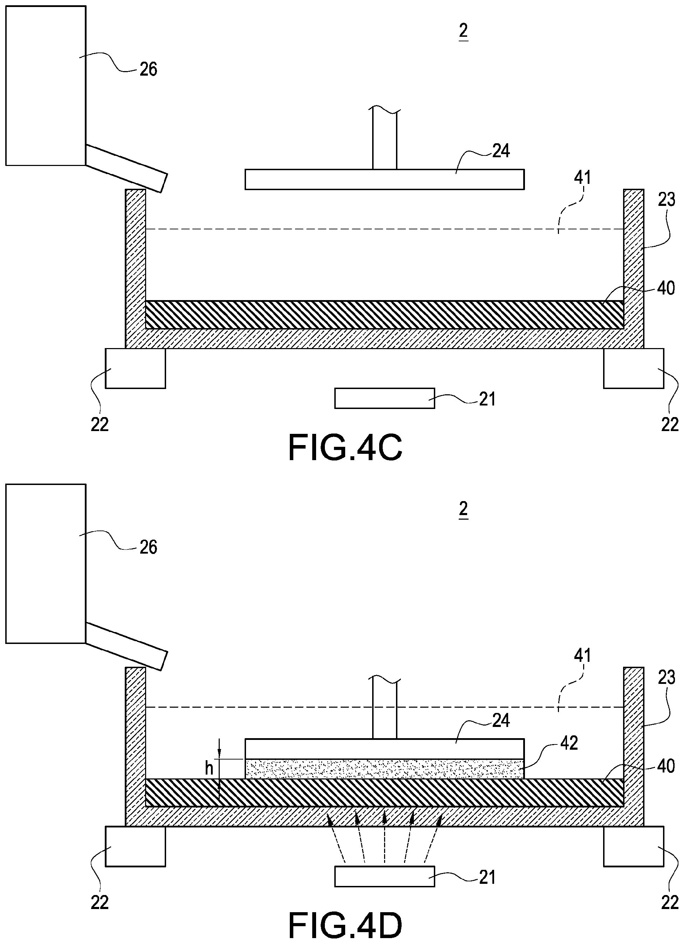

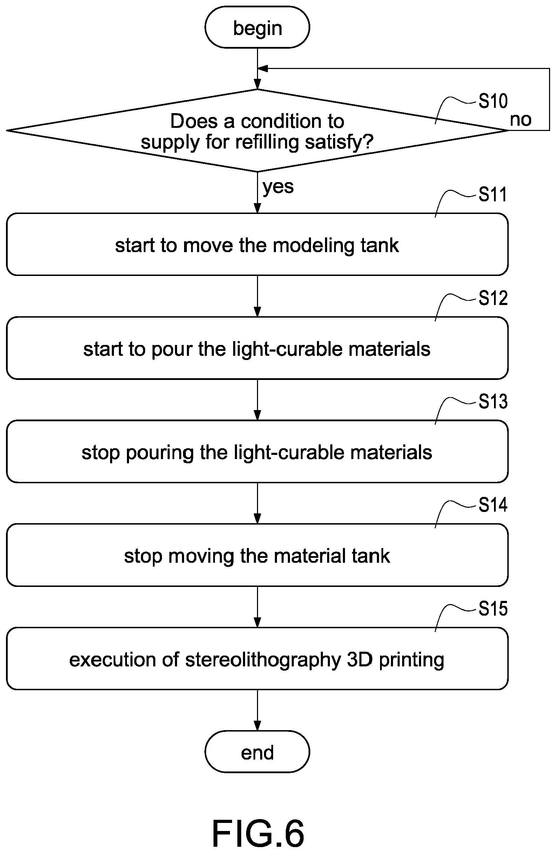

Please refer to Fig. 4A to Fig. 6 simultaneously, Fig. 4A is a first schematic view of stereolithography 3D printing according to one embodiment of the present disclosed example, Fig. 4B is a second schematic view of stereolithography 3D printing according to one embodiment of the present disclosed example, Fig. 4C is a third schematic view of stereolithography 3D printing according to one embodiment of the present disclosed example, Fig. 4D is a forth schematic view of stereolithography 3D printing according to one embodiment of the present disclosed example, Fig. 5 is a schematic view of appearance of a 3D printer according to one embodiment of the present disclosed example, and Fig. 6 is a flowchart of a 3D printing method of improving effectiveness of pouring materials according to a first embodiment of the present disclosed example.

The stereolithography 3D printer 2 shown in Fig. 4A to Fig. 4D is configured to move the material tank 23 by moving horizontally. The stereolithography 3D printer 2 shown in Fig. 5 is configured to move the material tank 23 by rotating.

The 3D printing method of improving effectiveness of pouring materials of each embodiment of the present disclosed example may be implemented by any stereolithography 3D printer 2 shown in Fig. 2 to Fig. 5 (the 3D printing method of improving effectiveness of pouring materials shown in FIG. 6 takes the moving means of horizontal movement as shown in FIG. 3A, FIG. 4A and FIG. 4B for explaining). The 3D printing method of improving effectiveness of pouring materials of this embodiment comprises following steps.

Step S10: the control module 20 of the stereolithography 3D printer 2 determines whether a default condition to supply for refilling satisfies. More specifically, above-mentioned condition to supply for refilling is configured by a user or a developer in advance and stored in the memory module 29.

One of the exemplary embodiments, the condition to supply for refilling may be any combination of following conditions : the time before printing the first layer of slice physical model (such as receipt of a print instruction or completion of loading the next layer of print data); each time the designated layers (such as 10 layers) of slice physical models 42 being printed; each time the designated volume of slice physical models 42 being printed; each time a default time interval elapsing; and a depth of the liquid level of the light-curable materials 41 in the material tank 23 is lower than a default depth.

If the condition to supply for refilling satisfies, the control module 20 performs the step S11. Otherwise, the control module 20 performs the step S10 again for continuous determination.

Step S11: the control module 20 controls the moving module 22 to start to moving the material tank 23. As shown in Fig. 4A, the control module 20 may control the moving module 22 to move the material tank 23 back and forth in a horizontal direction.

Step S12: the control module 20 controls the material-providing module 26 to pour the new light-curable materials 41 into the material tank 23. As shown in Fig. 4B, during pouring, because of the material tank 23 is moving, the poured light-curable materials 41 flows forcibly with the movement of the material tank 23, so as to become the horizontal status quickly.

One of the exemplary embodiments, the material-providing module 26 pours the stored light-curable materials 41 into the material tank 23 by a transportation pipe (as shown in Fig. 4B).

Please be noted that although above-mentioned embodiment is configured to firstly move the material tank 23, and then control the material-providing module 26 to start to pour the new light-curable materials 41 during pouring (namely, the step S11 is performed firstly, and then the step S12 is performed), but this specific example is not intended to limit the scope of the present disclosed example. There is not an order relationship between the step S11 and the step S12.

One of the exemplary embodiments, the control module 20 may firstly control the material-providing module 26 to start to pour the new light-curable materials 41, and then move the material tank 23 during pouring (namely, the step S12 is firstly performed, and then the step S11 is performed).

One of the exemplary embodiments, the control module 20 may control the material-providing module 26 to start to pour the new light-curable materials 41, and start to move the material tank 23 simultaneously (namely, the step S11 and the step S12 are performed simultaneously).

Step S13: the control module 20 controls the material-providing module 26 to stop pouring the new light-curable materials 41.

Step S14: the control module 20 controls the moving module 22 to stop moving the material tank 23. One of the exemplary embodiments, the control module 20 controls the moving module 22 to stop moving the material tank 23 after stopping pouring the new light-curable materials 41.

Please be noted that during moving, the light-curable materials 41 accommodated in the material tank 23 are distributed in the different positions of the material tank 23 without accumulating at the pouring position via forcibly flowing, so as to make the light-curable materials 41 accommodated in the material tank 23 become the horizontal status quickly via naturally flowing after stopping moving (as shown in Fig. 4C).

Please be noted that although above-mentioned embodiment is configured to firstly stop pouring the new light-curable materials 41, and then stop moving the material tank 23 (namely, the step S13 is performed firstly, and then the step S14 is performed), but this specific example is not intended to limit the scope of the present disclosed example. There is not an order relationship between the step S13 and the step S14.

One of the exemplary embodiments, the control module 20 may firstly stop moving the material tank 23, and then stop pouring the light-curable materials 41 (namely, the step S14 is performed firstly, and then the step S13 is performed).

One of the exemplary embodiments, the control module 20 stops pouring the light-curable materials 41 and stops moving the material tank 23 simultaneously (namely, the step S13 and the step S14 are performed simultaneously).

Step S15: the control module 20 loads the multiple layers of the print data from the memory module 29, and controls the stereolithography 3D printer 2 to execute the stereolithography 3D printing according to the loaded print data.

As shown in Fig. 4D, one of the exemplary embodiments, the control module 20 may make a modeling plane of the curing platform 24 contact with the light-curable materials 41 in the material tank 23 via lifting, and make the modeling plane be a default thickness h (such as 0.05 centimeters) away from the bottom (such as the demodeling film 40) of the material tank 23. Then, the control module 20 controls the light module 21 to irradiate heading to the light-curable materials 41 contacting with the modeling plane according to one layer of print data for manufacturing one layer of slice physical model 42. Finally, the control module 20 performs above-mentioned steps repeatedly until the multiple layers of slice physical model 42 are printed and stacked as a 3D physical model.

Please be noted that above-mentioned modeling plane may be the worktop of the curing platform 24 if there is not any layer of printed slice physical model 42. Above-mentioned modeling plane may be the surface of the top layer of printed slice physical models 42 if there is at least one layer of printed slice physical model 42 (for example, if three layers of slice physical models are printed, the modeling plane may be the top surface of the third layer of slice physical model 42). More specifically, the multiple layers of slice physical models 42 are stacked layer by layer during 3D printing, only the top layer of the slice physical models 42 (if it exists) is necessary to contact the light-curable materials 41 for printing the next layer of slice physical model. It is not necessary to make the whole curing platform 24 submerge into the light-curable materials 41.

One of the exemplary embodiments, the control module 20 is configured to adjust a distance between the worktop of the curing platform 24 and the demodeling film 40 according to a number of layers of printed slice physical models 42. For example, if there is not any layer of printed slice physical model 42, the worktop of the curing platform 24 is the default thickness (h) away from the demodeling film 40. If there is one layer of printed slice physical model 42, the worktop of the curing platform 24 is double of default thickness (double of h) away from the demodeling film 40. If there are two layers of printed slice physical models 42, the worktop of the curing platform 24 is triple of default thickness away from the demodeling film 40, and so forth.

Thus, the present disclosed example can reduce the waiting time after supplementing to the light-curable materials effectively, and then reduce the time required by execution of 3D printing.

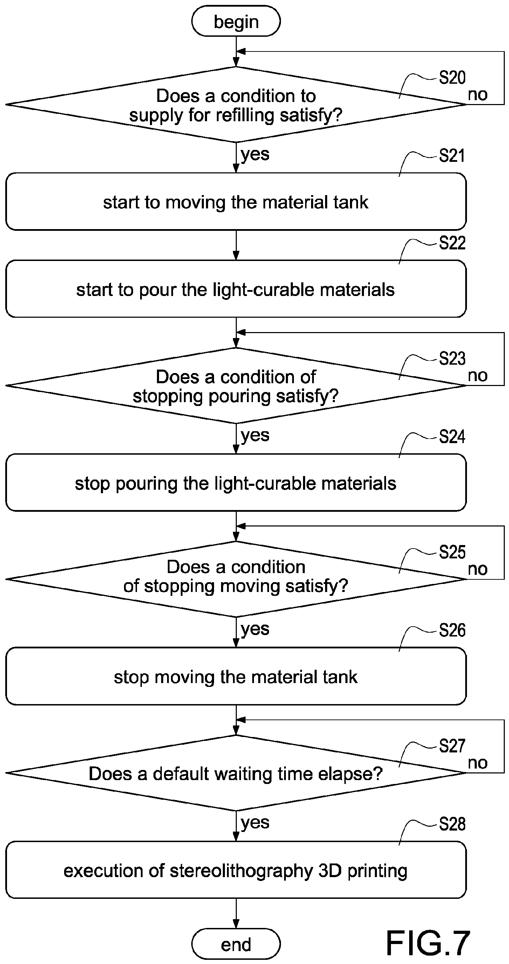

Please refer to Fig. 7 simultaneously, Fig. 7 is a flowchart of a 3D printing method of improving effectiveness of pouring materials according to a second embodiment of the present disclosed example. Th 3D printing method of improving effectiveness of pouring materials of this embodiment uses the moving means that rotation as shown in Fig. 3B and Fig. 5, but this specific example is not intended to limit the scope of the present disclosed example. The moving means may be replaced with horizontal movement as shown in Fig. 3A, Fig. 4A and Fig. 4B in the other embodiment. The 3D printing method of improving effectiveness of pouring materials of this embodiment comprises following steps.

Step S20: the control module 20 of the stereolithography 3D printer 2 determines whether a default condition to supply for refilling satisfies.

If the condition to supply for refilling satisfies, the control module 20 performs the step S21. Otherwise, the control module 20 performs the step S20 again for continuous determination.

Step S21: the control module 20 controls the moving module 22 (as shown in Fig. 5, the moving module 22 may be a rotary device comprising at least one motor, gears, at least one roulette and so on) to start to rotate the material tank 23 horizontally.

Step S22: the control module 20 controls the material-providing module 26 to pour the stored light-curable materials 41 into the material tank 23 by a transportation pipe. The poured light-curable materials 41 may be distributed at each position of the material tank 23 evenly because of the centrifugal force making the light-curable materials 41 poured into the material tank 23 flow forcibly.

One of the exemplary embodiments, during the material-providing module 26 pouring the light-curable materials 41, the control module 20 may control the moving module 22 to rotate the material tank 23 with a first speed (such as 720 degrees per minute).

Please be noted that, the present disclosed example can further mix the original light-curable materials 41 in the material tank 23 and the new pouring light-curable materials 41 quickly and make the mixed light-curable materials 41 fill the material tank 23 evenly, so as to make the light-curable materials 41 at each position of the material tank 23 have the same quality and make the printing quality be more stable.

Please be noted that there is not an order relationship between the step S21 and the step S23. The person skilled in the art of the present disclosed example may arbitrarily change the performing order of the step S21 and the step S22.

Step S23: the control module 20 determines whether a condition of stopping pouring satisfies. More specifically, above-mentioned condition of stopping pouring is configured by a user or a developer in advance and stored in the memory module 29.

One of the exemplary embodiments, the condition of stopping pouring may be any combination of following conditions: a designated volume of light-curable materials 41 having been poured; a designated time (such as 10 seconds) elapsing, the amount of the light-curable materials 41 accommodated in the material tank 23 exceeding a default amount (a weight of the light-curable materials 41 sensed by a weight sensor is larger than a default weight, or a depth of the liquid level of the light-curable materials 41 sensed by a liquid level sensor is higher than a default depth), and so forth.

If the condition of stopping pouring satisfies, the control module 20 performs the step S24. Otherwise, the control module 20 performs the step S23 again for pouring the light-curable materials 41 and determining whether the condition of stopping pouring satisfies continuously.

Step S24: the control module 20 controls the material-providing module 26 to stop pouring the light-curable materials 41.

Step S25: the control module 20 determines whether a condition of stopping moving satisfies. More specifically, above-mentioned condition of stopping moving is configured by a user or a developer in advance and stored in the memory module 29.

One of the exemplary embodiments, the condition of stopping moving may be at least one of moving a default times (such as moving back and forth for 3 times), moving for a default time (such as 3 seconds) or rotating a default angle (such as rotating 180 degrees if the moving means is rotation).

One of the exemplary embodiments, in the status of the control module 20 firstly controlling the material-providing module 26 to stop pouring the light-curable materials 41 and then controlling the moving module 22 to stop moving the material tank 23, above-mentioned condition of stopping moving may be configured as that set the time point of stopping pouring as the starting reference point. For example, above-mentioned condition of moving for the default times (such as moving back and forth for 3 times) is to move the material tank 23 for the default times (such as moving back and forth for 3 times) after stopping pouring the light-curable materials 41.

If the condition of stopping moving satisfies, the control module 20 performs the step S26. Otherwise, the control module 20 continues to control the moving module 22 to move the material tank 23, and determines whether the condition of stopping moving satisfies continuously.

Step S26: the control module 20 controls the moving module 22 to stop moving the material tank 23.

Please be noted that there is not an order relationship between the step S23-24 and the step S25-26. The person skilled in the art of the present disclosed example may arbitrarily change the performing order of the step S23-S24 and the step S25-S26.

One of the exemplary embodiments, the control module 20 firstly performs the step S22-S24 and then performs the step S21, S25-26. Namely, supplementing to the light-curable materials 41 is firstly be completed, and moving the material tank 23 follows.

Step S27: the control module 20 starts to time a default waiting time via a built-in timer (not shown in figures) and wait, and determines whether the default waiting time elapses. More specifically, when just stopping moving, the light-curable materials 41 in the material tank 23 may be still the flowing status. This embodiment can prevent the printing from failure caused by using the flowing light-curable materials 41 via waiting for the light-curable materials 41 in the material tank 23 becoming the evenly static status via naturally flowing.

If the default waiting time elapses, the control module 20 performs the step S28. Otherwise, the control module 20 performs the step S27 again for waiting.

Step S28: the control module 20 controls the stereolithography 3D printer 2 to execute a stereolithography 3D printing according to the loaded print data for printing a 3D physical model layer by layer.

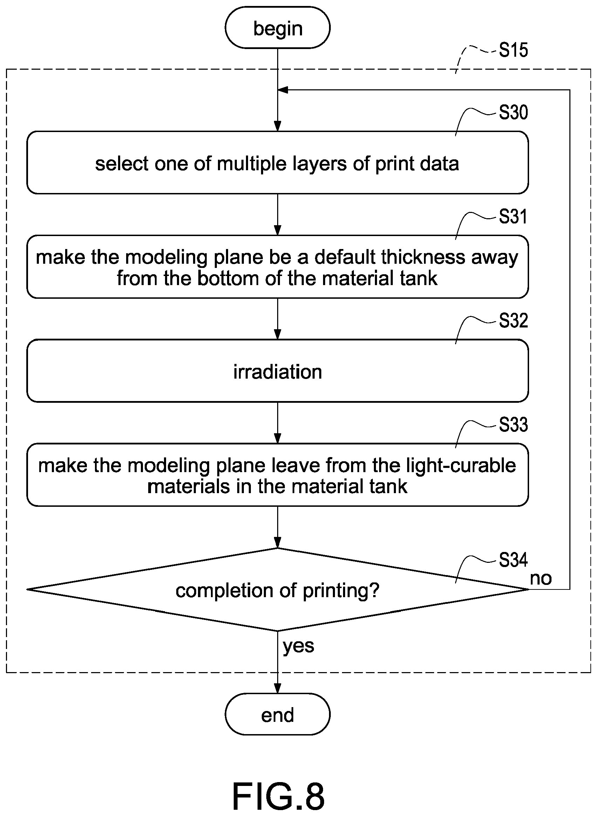

Please refer to Fig. 8 simultaneously, which is a flowchart of a 3D printing method of improving effectiveness of pouring materials according to a third embodiment of the present disclosed example. More specifically, after reception of a 3D printing instruction (such as receiving the printing data and the 3D printing instruction from the computer apparatus 3), the stereolithography 3D printer 2 may perform following steps for manufacturing a 3D physical model corresponding to above-mentioned print data. Compare to the embodiments shown in Fig. 7 and Fig.8, the step of 3D printing (namely the step S15 shown in Fig. 6 or the step S28 shown in Fig. 28) of this embodiment comprises following steps.

Step S30: the control module 20 of the stereolithography 3D printer 2 selects one of the multiple layers of print data in order, such as the first layer of print data.

One of the exemplary embodiments, the multiple layers of the print data may comprise a plurality of 2D images, each of the 2D images is used to describe a shape of the corresponding layer of slice physical model.

Step S31: the control module 20 moves the curing platform 24 by the lifting module 27 for making the modeling plane of the modeling platform 24 be the default thickness (such as 0.05 centimeters) away from the bottom of the material tank 23.

Step S32: the control module 20 controls the light module 21 to irradiate heading to the modeling plane (the modeling plane is the worktop of the curing platform 24 when printing the first layer of slice physical model) according to the selected layer of print data for printing one layer of slice physical model.

One of the exemplary embodiments, each layer of the print data is a 2D image, the control module 20 may control the light module 21 irradiate heading to a plurality of positions respectively corresponding to a plurality of pixels of one layer of print data according to a plurality of pixel values of the pixels of the selected layer of print data for printing one layer of slice physical model.

Step S33: the control module 20 controls the curing platform 24 to move (such as lifting up) for making the modeling plane leave from the light-curable materials 41 in the material tank 23. After the modeling plane left from the light-curable materials 41 in the material tank 23, the light-curable materials 41 in the material tank 23 may backfill a space occupied by the modeling plane previously via naturally flowing and making the liquid level revert to be horizontal.

Step S34: the control module 20 determines whether completion of 3D printing. For example, the control module 20 determines whether all of the multiple layers of the slice physical models have been printed.

If any layer of slice physical model is not printed, the control module 20 performs the step S30 to step S33 for printing the next layer of the slice physical model (such as the second layer of slice physical model), and so on, until all of slice physical models are printed completely and stacks as the 3D physical model.

## Claims

1. A 3D printing method of improving effectiveness of pouring materials, the 3D printing method being applied to a stereolithography 3D printer (2), the stereolithography 3D printer (2) comprising a light module (21), a curing platform (24), a material tank (23), a material-providing module (26), a moving module (22), the 3D printing method of improving effectiveness of pouring materials comprising following steps:
a) when a condition to supply for refilling satisfies, controlling the moving module (22) to start to move the material tank (23), and controlling the material-providing module (26) to pour new light-curable materials (41) into the material tank (23), wherein execution of pouring the new light-curable materials (41) is before starting to move the material tank (23), after starting to move the material tank (23), or simultaneous with starting to move the material tank (23);
b) controlling the material-providing module (26) to stop pouring the new light-curable materials (41) into the material tank (23), and controlling the moving module (22) to stop moving the material tank (23), wherein execution of stopping moving the material tank (23) is before stopping pouring the new light-curable materials (41), after stopping pouring the new light-curable materials (41), or simultaneous with stopping pouring the new light-curable materials (41); and
c) controlling the light module (21) and the curing platform (24) to print at least one of multiple layers of slice physical models (42) according to multiple layers of print data, the multiple layers of the slice physical models (42) constitute a 3D physical model.

2. The 3D printing method of improving effectiveness of pouring materials according to claim 1, wherein the step a) is configured to firstly control the moving module (22) to start to move the material tank (23), and then control the material-providing module (26) to start to pour the new light-curable materials (41) during moving the material tank (23).

3. The 3D printing method of improving effectiveness of pouring materials according to claim 1, wherein the step a) is configured to firstly control the material-providing module (26) to start to pouring the light-curable materials (41), and then control the moving module (22) to start to move the material tank (23) during pouring the new light-curable materials (41).

4. The 3D printing method of improving effectiveness of pouring materials according to claim 1, wherein the step b) is configured to firstly control the material-providing module (26) to stop pouring the light-curable materials (41), and then control the swing module (22) to stop moving the material tank (23) when a condition of stopping moving satisfies.

5. The 3D printing method of improving effectiveness of pouring materials according to claim 1, wherein the step a) is configured to control the moving module (22) to move the material tank (23) back and forth in a horizontal direction, or control the moving module (22) to rotate the material tank (23) horizontally.

6. The 3D printing method of improving effectiveness of pouring materials according to claim 1, wherein the step a) is configured to control the moving module (22) to move the material tank (23) back and forth in a horizontal direction and rotate the material tank (23) horizontally.

7. The 3D printing method of improving effectiveness of pouring materials according to claim 1, further comprising a step d) after the step b) and before the step c) timing and waiting a default waiting time for making the light-curable materials (41) in the material tank (23) become a horizontal status by naturally flowing within the default waiting time.

8. The 3D printing method of improving effectiveness of pouring materials according to claim 1, wherein the stereolithography 3D printer (2) is an uplight stereolithography 3D printer, the step c) comprises following steps:
c1) selecting one of the multiple layers of the print data;
c2) making a modeling plane of the curing platform (24) be a default thickness (h) away from a bottom of the material tank (23);
c3) controlling the light module (21) to irradiate heading to the modeling plane according to the selected layer of the print data for printing one layer of the slice physical model (42);
c4) making the modeling plane leave from the light-curable materials (41) in the material tank (23); and
c5) performing the step c1) to the step c4) repeatedly until all of the multiple layers of the slice physical models (42) are printed.

9. The 3D printing method of improving effectiveness of pouring materials according to claim 8, wherein each layer of the print data is a 2D image, the step c3) is configured to control the light module (21) to irradiate heading to a plurality of positions of the modeling plane respectively corresponding to a plurality of pixels of the selected layer of the print data for printing one layer of the slice physical model (42) according to a plurality of pixel values of the pixels of the selected layer of the print data.

10. The 3D printing method of improving effectiveness of pouring materials according to claim 1, wherein the condition to supply for refilling is at least one of reception of a printing instruction, printing a default number of layers of the slice physical models (42) each time, printing a default volume of the slice physical models (42) each time, a default time interval elapsing each time, and a liquid level depth of the light-curable materials (41) in the material tank (23) being lower than a default depth.
